(19) Europäisches Patentamt / European Patent Office / Office européen des brevets

(11) **EP 2 485 555 A1**

(12) **EUROPEAN PATENT APPLICATION**

(43) Date of publication:
**08.08.2012 Bulletin 2012/32**

(51) Int Cl.:
**H04W 72/08** (2009.01)

(21) Application number: **12151328.7**

(22) Date of filing: **16.01.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Skärby, Christian**<br>  **SE-113 51 STOCKHOLM (SE)**<br>• **Johansson, Anders**<br>  **SE-165 70 HÄSSELBY (SE)** |
| (30) Priority: **07.02.2011 US 201113022473** | (74) Representative: **Kühn, Friedrich Heinrich**<br>**Ericsson AB**<br>**Patent Unit LTE**<br>**Torshamnsgatan 23**<br>**164 80 Stockholm (SE)** |
| (71) Applicant: **Telefonaktiebolaget L M Ericsson (PUBL)**<br>**S-164 83 Stockholm (SE)** | |

(54) **Mitigation of interfering sounding reference signals in radiocommunication systems**

(57)    Sounding reference signals transmitted in one cell, and which use a same base sequence as sounding reference signals transmitted in a neighboring cell, may cause interference. Detection of signal energy on unallocated sounding resources in a cell can be used when allocating additional sounding resources in that cell. Coordination among base stations, e.g., eNodeBs, can be performed to mitigate potential sounding reference signal interference.

EP 2 485 555 A1

## Description

## TECHNICAL FIELD

The present invention relates generally to telecommunications systems, and in particular, to methods, systems, devices and software for mitigation of interference associated with sounding reference signals in radiocommunication systems.

## BACKGROUND

Radiocommunication networks were originally developed primarily to provide voice services over circuit-switched networks. The introduction of packet-switched bearers in, for example, the so-called 2.5G and 3G networks enabled network operators to provide data services as well as voice services. Eventually, network architectures will likely evolve toward all Internet Protocol (IP) networks which provide both voice and data services. However, network operators have a substantial investment in existing infrastructures and would, therefore, typically prefer to migrate gradually to all IP network architectures in order to allow them to extract sufficient value from their investment in existing infrastructures. Also to provide the capabilities needed to support next generation radiocommunication applications, while at the same time using legacy infrastructure, network operators could deploy hybrid networks wherein a next generation radiocommunication system is overlaid onto an existing circuit-switched or packet-switched network as a first step in the transition to an all IP-based network. Alternatively, a radiocommunication system can evolve from one generation to the next while still providing backward compatibility for legacy equipment.

One example of such an evolved network is based upon the Universal Mobile Telephone System (UMTS) which is an existing third generation (3G) radiocommunication system that is evolving into High Speed Packet Access (HSPA) technology. Yet another alternative is the introduction of a new air interface technology within the UMTS framework, e.g., the so-called Long Term Evolution (LTE) technology. Target performance goals for LTE systems include, for example, support for 200 active calls per 5 MHz cell and sub 5 ms latency for small IP packets. Each new generation, or partial generation, of mobile communication systems add complexity and abilities to mobile communication systems and this can be expected to continue with either enhancements to proposed systems or completely new systems in the future.

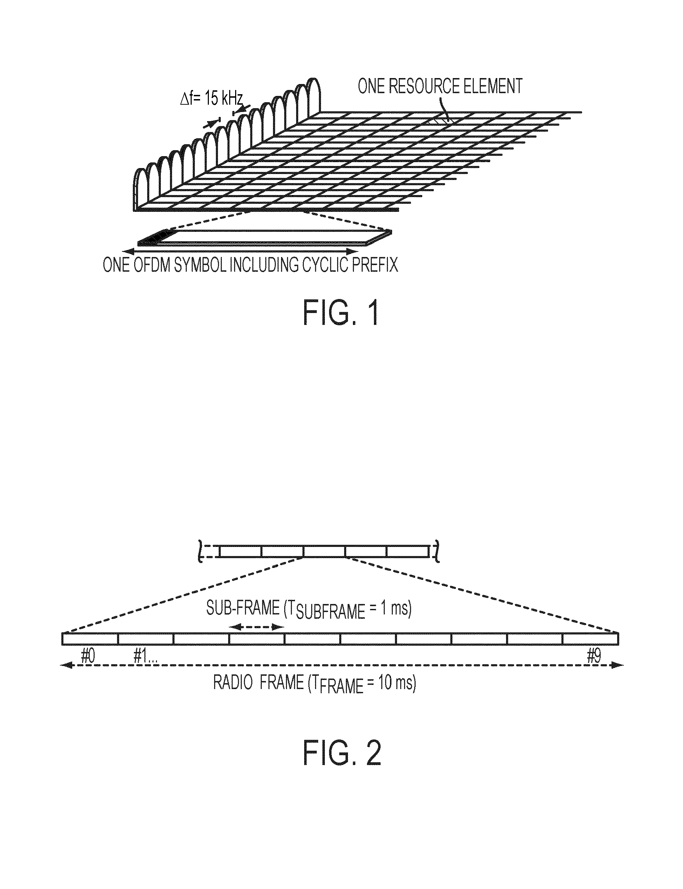

LTE uses orthogonal frequency division multiplexing (OFDM) in the downlink and discrete Fourier transform (DFT)-spread OFDM in the uplink. The basic LTE downlink physical resource can thus be seen as a time-frequency grid as illustrated in Figure 1, where each resource element corresponds to one OFDM subcarrier during one OFDM symbol interval. In the time domain, LTE downlink transmissions are organized into radio frames of 10 ms, each radio frame consisting of ten equally-sized subframes of length $T_{subframe}$ = 1 ms as shown in Figure 2.

Furthermore, the resource allocation in LTE is typically described in terms of resource blocks, where a resource block corresponds to one slot (0.5 ms) in the time domain and 12 contiguous subcarriers in the frequency domain. Resource blocks are numbered in the frequency domain, starting with 0 from one end of the system bandwidth. Downlink transmissions are dynamically scheduled, i.e., in each subframe the base station -- typically referred to as an eNB in LTE-- transmits control information indicating to which terminals and on which resource blocks the data is transmitted during the current downlink subframe. This control signaling is typically transmitted in the first 1, 2, 3 or 4 OFDM symbols in each subframe.

Sounding reference signals (SRS) are used by the LTE eNB to obtain information about the uplink channel, i.e., in the transmit direction from a mobile station or UE toward an eNB. The basic principle behind sounding is that the UE periodically transmits a wideband signal according to a configuration sent from the eNB to the UE. Since the signal is known by the eNB it can be used to calculate a channel estimate for the UE's uplink channel which in turn can be used by various RRM-related algorithms such as scheduling, link adaptation and power control.

Since sounding uses resources in radiocommunication systems that could be used to transmit user data instead, a decision must be made by the system, or by the persons designing the system, about whether the improved performance of the RRM algorithms associated with using sounding is worth using those transmission resources. For LTE, the signal that is transmitted by the UE as a sounding reference signal includes a Zhadoff-Chu sequence. The sounding reference signal is transmitted during one symbol in time and over a configured number of sub carriers. Thus, the length of the sequence corresponds to the transmission bandwidth used by the sounding signal.

The manner in which these sequences are generated is described in detail in the 3GPP standards document 3GPP TS 36.211 "Physical Channels and Modulation" to which the interested reader is directed for more information. However the following qualities of the Zhadoff-Chu sequences as they are used in sounding reference signals are relevant for this specification: (1) a Zhadoff-Chu sequence has zero autocorrelation except for the lag 0 point, (2) the number of unique sequences of a certain length is the same as the length the sequence which is always a prime number, and (3) two different unique sequences are not completely orthogonal.

According to the 3GPP standard, all UEs in a cell have the same base sequence for each sequence length. The base sequence is derived from the cell identity which is a network planning parameter. UEs within the same cell can be differentiated on three different levels, (1) time multiplexing: UEs transmit their reference sequence at different times, (2) frequency multiplexing: UEs transmit their reference sequence at the same time but in different parts of the band, and/or (3) cyclic shift multiplexing: UEs transmit on the same frequency at the same time but with cyclically shifted versions of the same sequence. The manner in which the UEs are multiplexed is entirely up the eNB as periodicity, time offset, bandwidth and cyclic shift are all assigned by the eNB to each UE individually. From here on, the sounding configuration of one UE, i.e., as characterized by periodicity, time offset, bandwidth, cyclic shift, etc., are referred to as a sounding resource for convenience purposes.

Note that even though the eNB has full freedom to decide how the UEs shall perform sounding, some configurations are not useful. For example, it does not make sense to configure UEs to perform sounding transmissions on different bandwidths in a way so that the transmissions are overlapping in time and/or frequency. Different bandwidth corresponds to different base sequences which accordingly are not orthogonal.

One difficulty with using sounding in a network is the limited number of base sequences which are available. The 3GPP standard defines 30 sets of base sequences, where each set contains one base sequence for each possible sounding bandwidth. In the typical case where the network is synchronized, a neighboring cell using the same base sequence causes serious interference problems between sounding reference signals transmitted within different cells. This is because there is no way to separate two users in different cells that are transmitting sounding reference signals which use the same base sequence and cyclic shift. To the eNB, it will simply look like one user transmitting with a power equal to the sum of the signals from the two UEs and having a complex channel equal to the sum of the two users' respective channels to the receiving antenna. Although cell planning algorithms exist which can minimize the probability that two neighboring cells use the same base sequence, cases where two cells are near enough to interfere with each other are nearly unavoidable, causing performance degradation.

Thus, it would be desirable to provide techniques and mechanisms which mitigate the issues associated with interfering sounding reference signals.

## ABBREVIATIONS/ACRONYMS

ANR       Automatic Neighbor Relations

eNB       enhanced NodeB

LTE       Long term evolution

MIMO      Multiple-Input Multiple-Output

OFDM      Orthogonal Frequency Division Multiple Access

RRM       Radio Resource Management

SRS       Sounding Reference Signal

UE        User equipment

## SUMMARY

Sounding reference signals transmitted in one cell, and which use a same base sequence as sounding reference signals transmitted in a neighboring cell, may cause interference. Detection of signal energy on unallocated sounding resources in a cell can be used when allocating additional sounding resources in that cell. Coordination among base stations, e.g., eNodeBs, can be performed to mitigate potential sounding reference signal interference.

According to one exemplary embodiment, a method for allocating sounding reference signal (SRS) resources in a radiocommunication system can include the steps of: detecting, by a base station, an amount of signal energy associated with each of a plurality of SRS resources which are currently unallocated by the base station, and allocating, by the base station, one of the plurality of SRS resources for transmission of a sounding reference signal based, at least in part, on the detecting step.

According to another embodiment, a base station includes at least one detector configured to detect an amount of signal energy associated with each of a plurality of sounding reference signals, SRS, resources which are currently unallocated by the base station and a processor configured to allocate one of the plurality of SRS resources for transmission of a sounding reference signal based, at least in part, on an output of the at least one detector.

Among other advantages, interference mitigation for sounding reference signals according to embodiments provides for better channel quality estimates to be generated using SRSs which, in turn, leads to improved system performance. Coupling detection of interference with the triggering of one or more interference mitigation actions provides an automated mechanism for such improved performance. As described below, implicit interference mitigation methods have the advantage of not requiring any signaling between eNBs, while using explicit signaling can speed up the coordination as well as reduce the impact of any misdetection that can occur if thresholds are not well tuned.

## BRIEF DESCRIPTION OF THE DRAWINGS

The exemplary embodiments described below will be understood, in conjunction with the drawings submitted herewith in which:

Figure 1 represents an LTE OFDM downlink signal in the frequency/time domain;

Figure 2 shows a subframe associated with an LTE OFDM signal in the time domain;

Figure 3 illustrates an exemplary base station and mobile station in which exemplary embodiments can be implemented;

Figure 4 depicts a radiocommunication system in which exemplary embodiments can be implemented;

Figure 5 shows elements of transmit/receive chains in which exemplary embodiments can be implemented;

Figure 6 illustrates a sounding reference signal (SRS) resource detection mechanism according to an embodiment;

Figure 7 is a graph illustrating absolute and relative thresholds which can be used to trigger interference mitigation actions according to embodiments;

Figure 8 is a graph showing the grouping of sounding resources into sets for detection and/or allocation to UEs according to embodiments;

Figure 9 illustrates SRS interference coordination areas according to an embodiment;

Figure 10 depicts an eNodeB in which embodiments can be implemented; and

Figure 11 is a flow chart illustrating a method according to an embodiment.

## DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims. The following embodiments are discussed, for simplicity, with regard to the terminology and structure of LTE systems. However, the embodiments to be discussed next are not limited to LTE systems but may be applied to other telecommunications systems.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification are not necessarily all referring to the same embodiment. Further, the particular features, structures or characteristics may be combined in any suitable manner in one or more embodiments.

Embodiments provide for, among other things, an autonomous method for a first eNB to identify that a neighboring cell controlled by a second eNB is using the same base sequence for sounding reference signals as a cell controlled by the first eNB. Furthermore, embodiments described below also provide for a number of actions to take when such an interfering second eNB is identified in order to mitigate the interference problems. Alternative embodiments with, and without, using explicit signaling between eNBs are shown. Moreover, embodiments described herein can also be used to mitigate other types of sounding reference signal interference, i.e., interference which is not associated with a neighboring cell's usage of a same base sequence.

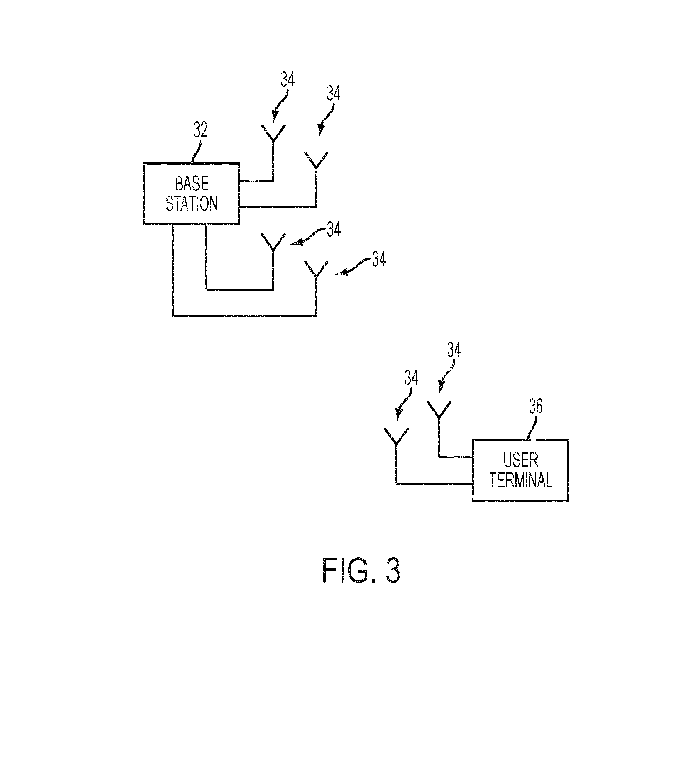

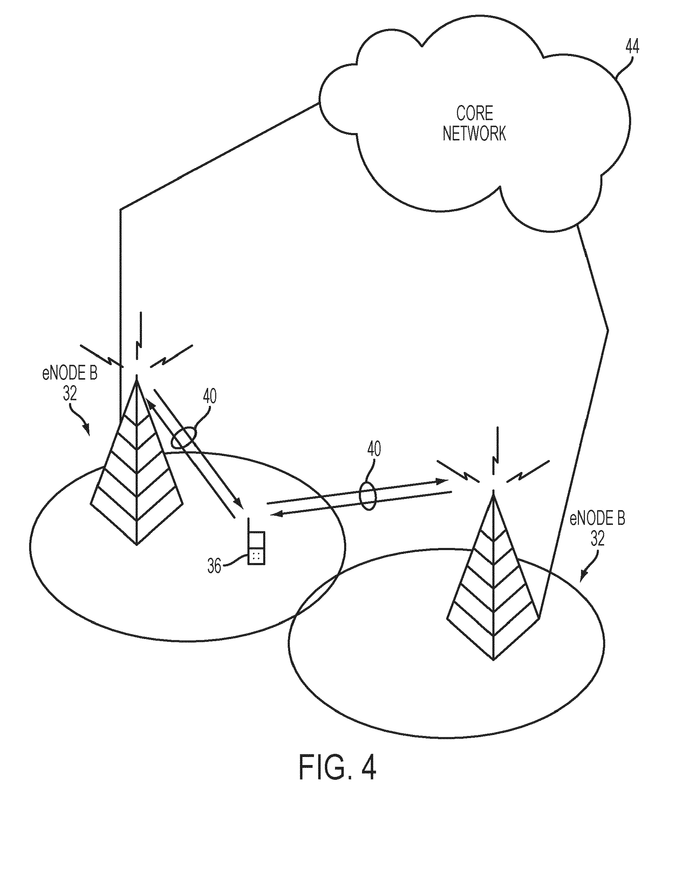

To provide some context for the following exemplary embodiments related to sounding reference signaling and reducing interference associated therewith, consider the exemplary radiocommunication system as shown from two different perspectives in Figures 3 and 4, respectively. To increase the transmission rate of the systems, and to provide additional diversity against fading on the radio channels, modern wireless communication systems include transceivers that use multi-antennas --often referred to as a MIMO systems--. The multi-antennas may be distributed to the receiver side, to the transmitter side and/or provided at both sides as shown in Figure 3. More specifically, Figure 3 shows a base station 32 having four antennas 34 and a user terminal -- also referred to herein as "user equipment" or "UE"-- 36 having two antennas 34. The number of antennas shown in Figure 3 is exemplary and is not intended to limit the actual number of antennas used at the base station 32 or at the user terminal 36 in the exemplary embodiments to be discussed below.

Additionally, the term "base station" is used herein as a generic term. As will be appreciated by those skilled in the art, in the LTE architecture an evolved NodeB (eNodeB) may correspond to the base station, i.e., a base station is a possible implementation of the eNodeB. However, the term "eNodeB" is also broader in some senses than the conventional base station since the eNodeB refers, in general, to a logical node. The term "base station" is used herein as inclusive of a base station, a NodeB, an eNodeB or other nodes specific for other architectures. An eNodeB in an LTE system handles transmission and reception in one or several cells, as shown for example in Figure 4.

Figure 4 shows, among other things, two eNodeBs 32 and one user terminal or UE 36. The user terminal 36 uses dedicated channels 40 to communicate with the eNodeB(s) 32, e.g., by transmitting or receiving RLC PDU segments as described below. The two eNodeBs 32 are connected to a Core Network 44. In the context of this specification, the UE 36 may be transmitting sounding reference signals using a base sequence to its intended eNB 32, i.e., the eNB on the left hand side of Figure 4, but may interfere with the sounding reference signals transmitted by other UEs (not shown) in a neighboring cell, i.e., associated with the eNB 32 on the right hand side of Figure 4.

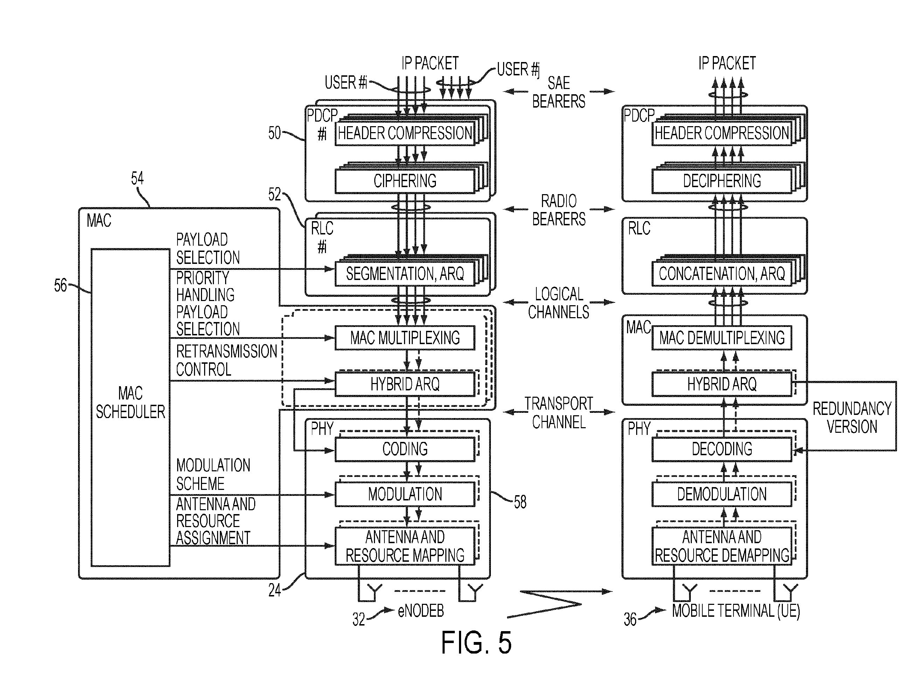

One exemplary LTE architecture for processing data for transmission by an eNodeB 32 to a UE 36, i.e., in the downlink (DL) is shown in Figure 5. Therein, data to be transmitted by the eNodeB 32, e.g., IP packets, to a particular user is first processed by a packet data convergence protocol (PDCP) entity 50 in which the IP headers can be compressed and ciphering of the data is performed. The radio link control (RLC) entity 52 handles, among other things, segmentation of --and/or concatenation of-- the data received from the PDCP entity 50 into protocol data units (PDUs). Additionally, the RLC entity 52 provides a retransmission protocol, e.g., automatic repeat request (ARQ), which monitors sequence number status reports from its counterpart RLC entity in the UE 36 to selectively retransmit PDUs as requested. The medium access control (MAC) entity 54 is responsible for uplink and downlink scheduling via scheduler 56, as well as hybrid-ARQ processes. A physical (PHY) layer entity 58 takes care of coding, modulation, and multi-antenna mapping, among other things. Each entity 50-58 shown in Figure 5 provides outputs to, and receives inputs from, their adjacent entities by way of bearers or channels as shown. The reverse of these processes are provided for the UE 36 as shown in Figure 5 for the received data, and it will be appreciated by those skilled in the art that, although not shown in Figure 5, the UE 36 also has similar transmit chain elements as the eNB 32 for transmitting on the uplink (UL) toward the eNB 32 and the eNB 32 also has similar receive chain elements as the UE 36 for receiving data from the UE 36 on the UL.

Having described some exemplary LTE devices in which aspects of sounding reference signal interference mitigation according to embodiments can be implemented, the discussion now returns to such interference mitigation embodiments. Among other things, these embodiments take advantage of the fact that, typically, cell identities, and therefore base sequences used to generate sounding reference signals, change infrequently relative to how often new UEs 36 connect to the cells. To detect that, for example, there is a problematic neighboring cell associated with sounding reference signal transmission, an eNB 32 can listen for sounding transmissions on sounding resources which are not yet assigned to any UE in its own cell. If, for example, a transmission is detected on one or more of these unassigned sounding resources, this is a sign that a neighboring cell is using the same base sequence or, alternatively, that one or more sounding reference signals using a different base sequence are contributing sufficient interference energy to be detected. Since UEs 36 connect to cells in a random fashion and radiocommunication systems are typically not fully loaded all of the time, it is expected that there will be plenty of opportunities to detect sounding reference signal interference using the embodiments described below.

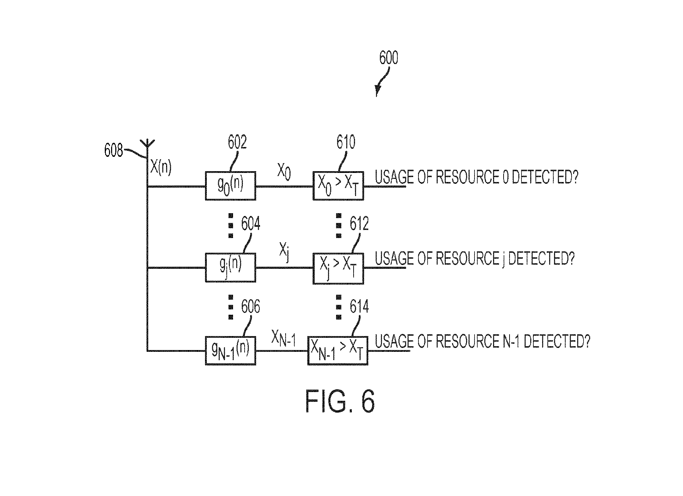

Detecting a sounding reference signal on an unassigned sounding resource according to an embodiment can be achieved by, for example, determining that an amount of signal energy received on that sounding resource exceeds a threshold. For example, as shown in Figure 6, a sounding resource detection mechanism 600 can be provided to an eNB 32. The sounding reference detection mechanism can include a plurality of matched filters 602, 604, 606, each of which are tuned to a particular sounding resource 0, j, N-1. In this context, a sounding resource can be defined as a particular base sequence with one or more of a particular time offset, frequency selection and/or cyclic shift of the base sequence, as defined in more detail in the above-referenced 3GPP standard document 3GPP TS 36.211, the disclosure of which is incorporated here by reference. Although only three matched filters are shown in Figure 6 for simplicity of the figure, it will be appreciated by those skilled in the art that more than three sounding resources can be probed for signal energy, the number N of which can be selected based on considerations which are discussed in more detail below.

A wideband signal $x(n)$ can be sampled from the eNB's antenna 608, and then provided to each of the matched filters 602, 604 and 606. The outputs of the matched filters 602, 604 and 606 are amounts of signal energy labeled $X_0$, $X_j$, $X_{N-1}$, respectively. These amounts of signal energy can then be compared to, for example, a threshold $X_T$ in comparators 610, 612 and 614. If a detected signal energy amount on a sounding resource exceeds the threshold value, then the corresponding comparator outputs a positive detection result, and otherwise a negative detection result. In this context a positive detection result indicates that the amount of signal energy associated with an unallocated sounding resource, e.g., from one or more SRS transmissions from a UE using a same base sequence in a different cell, is deemed sufficient to trigger an interference mitigation action, while a negative detection result indicates that no interference mitigation action need be taken. The threshold $X_T$ can thus be seen as a tuning parameter, by way of which the eNB or system can determine when to invoke one or more of the interference mitigation strategies discussed below.

It will be appreciated that, with the large number of time/frequency/cyclic shift permutations of the base sequences, there are potentially a very large number of sounding resources which an eNB could evaluate using, for example, the structure of Figure 6. However, this number can be reduced, and the associated processing made to be more manageable when considering certain aspects of anticipated network implementation of sounding. For example, typically a network will only use a limited number of the potential sounding resources due to, e.g., transmissions that are partially overlapping, e.g., in time and/or frequency, will lose a lot of their orthogonality. This fact, combined with the relatively slow and costly procedure to reconfigure a UE's, or eNB's, sounding resource, indicates that the number of sounding resources that will be used by a network simultaneously is likely to be quite limited in practice. Moreover, the detection/search performed using, e.g., the structure illustrated in Figure 6, can be performed relatively infrequently, since cell identities ,and thus base sequences, are expected to change relatively infrequently.

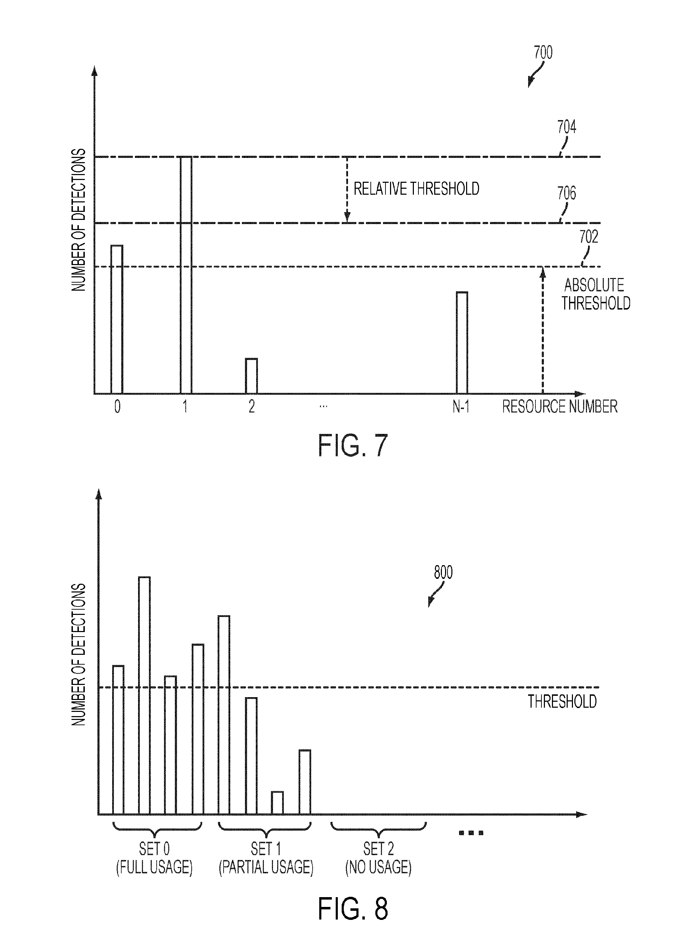

According to one embodiment, a positive detection result output from a comparator in Figure 6 can be used to trigger an interference mitigation action. Alternatively, by storing statistics about which sounding resources have been detected as being used by a neighboring cell, an eNB 32 can use such statistics to trigger an interference mitigation action. For example, thresholds, both absolute and/or relative, can be used to trigger mitigation actions, an example of which is shown in the graph 700 of Figure 7. Therein, the number of detections output from each comparator 602, 604, 606, etc., for each sounding resource is plotted, e.g., for a given time period. If an absolute threshold, e.g., threshold 702, is used, then an interference mitigation action can be taken when the absolute threshold is equaled or exceeded. For example, in Figure 7, an interference mitigation action could be taken for sounding resources 0 and 1, but not 2 or N-1.

Alternatively, a relative threshold, exemplified by lines 704 and 706 in Figure 7, could be used by an eNB 32 as a mitigation action trigger. Using a relative threshold, for example, a mitigation action could be triggered if the difference in the number of detections between the most frequently detected sounding resource, i.e., the sounding resource for which the amount of signal energy detected exceeds a threshold the most number of times in a given time period, and the least frequently detected sounding resource, i.e., the sounding resource for which the amount of energy detected exceeds the threshold the fewest number of times in the given time period, is more than the relative threshold. For example, in Figure 7, since the difference between the number of detections for sounding resource 1 and sounding resource 2 is greater than the relative threshold 704, 706, a mitigation action could be triggered by eNB 32. Absolute thresholds are relatively simple to implement and set, while relative thresholds are better at avoiding decisions based on misdetections at the cost of being more difficult to implement and set to a good value.

An alternative way of detecting that a neighbor is using the same base sequence is to average the output of each matched filter 602, 604, 606, etc., in Figure 6 independently over time and compare this average for each resource to a threshold, similar to what is shown in Figure 7 with the difference being that the y-axis would then be an average amount of signal energy per sounding resource rather than a number of detections. The foregoing are examples of possible ways in which the detection of signal energy on unassigned sounding resources by an eNB 32 can be used to trigger an interference mitigation action, however these are not intended to be limiting and other triggering mechanisms could be used.

Regardless of the particular triggering mechanism which is used, and according to embodiments described herein, the mitigation actions that an eNB 32 can take when a triggering event occurs can be divided into two categories: implicit interference mitigation actions, i.e., actions with no signaling between eNBs, and explicit interference mitigation actions, i.e., actions with signaling between eNBs. Implicit mitigation actions have the advantage that they do not load the interface between eNBs, i.e., the X2 interface. Explicit mitigation actions have the advantage that the reaction time will be much faster and the coordination will be more reliable. Some examples of each will now be described.

Starting with implicit mitigation actions, one way to avoid as much interference as possible is to assign the sounding resource with the least number of detections, i.e., a sounding resource that is not already used by any user in the cell associated with a first eNB for the next UE in that cell that needs a sounding resource. Assuming that a second, interfering eNB is using the same method, this will lead to the two eNBs avoiding each others' resources. If they are not using the same method, then at least the first eNB that is searching for problematic neighbors will benefit by avoiding the resources already in use.

If the search for used resources is performed less frequently than the time a UE 36 is typically using the same sounding resource, there may be a need to improve the chances that an eNB 32 can predict which resources will be used by a problematic neighbor. This can be accomplished according to an embodiment by dividing the resources into sets of resources which are known to all eNBs 32. One example of a division of resources into sets is to let one set consist of all resources with even number cyclic shifts and the other one consist of all resources with odd number cyclic shifts. Figure 8 shows a graph 800 illustrating how resources can be grouped into sets, based on their relative usage amount, e.g., Set 0 is known to typically be fully used, Set 1 is known to typically be partially used and Set 2 is known to typically not be used.

The chances of an eNB 32 identifying and predicting which sounding resources will be used by another eNB 32 can be improved if, for example, (a) each eNB makes sure that all resources in one set are allocated before allocating any resources in another set, and/or (b) each eNB always uses the same order picking which sets to use. The order in which an eNB 32 that has not yet detected a problematic neighbor selects the sets is not as important for these embodiments and can, for example, be either a fixed order for all eNBs 32 or randomly selected at startup. However, according to these embodiments, an eNB 32 should modify its selection order of sounding resources for its UEs 36 when it detects that a neighbor eNB 32 is using a certain set of sounding resources. Whether an eNB 32 that has detected that a neighbor with the same base sequence is using a particular set shall completely refrain from using this set or if it shall merely make sure that it is the last set from which resources shall be selected can, for example, be implemented as a network tuning parameter.

The choice of the size of the sets of sounding references used according to these embodiments mainly impacts the likelihood for an eNB to predict which resources will be unused by neighbors. If the sets are large, implying few sets, the number of neighbors that can effectively avoid collisions decreases but the predictability of which resources will be unused increases as it is less likely that a neighbor starts allocating from a new set. However, if the eNB 32 also keeps track of the order in which the problematic neighbor uses the sets, then the predictability increases since the acting eNB 32 can use the sets in the reverse order as compared to the neighbor eNB 32. The size of the sets can also be implemented as a network tuning parameter, although it should typically be quite large.

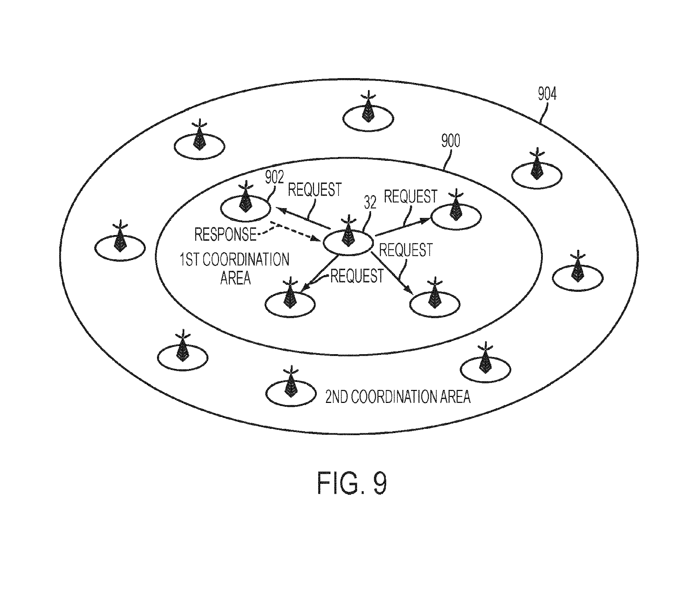

If explicit signaling between eNBs 32 is possible, an eNB 32 that has detected a problematic neighbor using, for example one of the techniques described above, can broadcast the base sequence identity of the cell for which it wishes to initiate coordination to all neighboring eNBs 32. Such inter-eNB communications can, for example, be implemented using X2 interfaces in an LTE system, a description of which interfaces can be found in International Patent Application PCT/EP2008/000193, the disclosure of which is incorporated here by reference. According to an embodiment, any eNB 32 receiving an SRS interference mitigation message that has a cell using the same base sequence identity which is in the message, shall respond to the message so that coordination can occur. If the eNB 32 which sent an SRS interference mitigation message does not receive any responses, that eNB 32 can either resend the message to a larger number of eNBs or it can fall back to the implicit methods described above. For example, as shown in Figure 9, an eNB 32 could initially send an SRS interference mitigation message to four neighboring eNBs over X2 interfaces within a first coordination area 900, this eNB 32 being termed herein a "sending eNB". In the example of Figure 9, the eNB 902 responds to the message, termed herein a "responding eNB". If, however, none of the four eNBs within the first coordination area 900 had responded then the eNB 32 could resend the SRS interference mitigation message to more distant eNBs, e.g., those in a second coordination area 904. More or fewer than two coordination areas could be used. Also note that automatic neighbor relations (ANR) measurements can be used to narrow down the number of eNBs 32 that need to be communicated with when sending an SRS interference mitigation message.

To coordinate resource usage with a responding eNB 32, the same principle with resource sets as described above can be used according to an embodiment. When initiating coordination, the sounding resource sets that an eNB 32 has detected usage of can be sent in an SRS interference mitigation message. This information can be used by responding eNBs 32 to see whether the message was intended for them or not. The response to the SRS interference mitigation message sent by a responding eNB 32 can then contain the sets preferred by the receiving eNB 32 as well as an identification of the set which the responding eNB recognized in the SRS interference mitigation message as a set which the responding eNB is using to allocate sounding resources. The latter can be used by the sending eNB 32 to determine if it needs to increase the coordination area to find all problematic neighbors. Once the sending eNB has all the responses it needs it can proceed and change its priority order for which to assign sounding reference resources to UEs within its cell. The reason why only the sending eNB 32 changes its selection order according to this embodiment is to minimize oscillations where a request sent by one eNB 32 changes the priority order of another eNB 32 that is coordinated with a third eNB 32, triggering a new request from the third eNB 32 which in turn might cause the first eNB 32 to send a new request.

Combining several responses to an SRS interference mitigation message can, for example, be performed according to an embodiment by using the product of the priorities for each set as a metric relating to how likely it is that a sounding resource set is free. For example, let the resource sets be denoted {set0, set1, set2, set3} and consider that:

> eNB0, eNB1 and eNB2 are using the same base sequence,
> eNB0 has the following priority order: {set0, set2, set1, set3},
> eNB 1 has the following priority order: {set2, set0, set1, set3}, and
> eNB2 has the following priority order: {set1, set3, set0, set2}.

Then suppose that eNB0 detects usage of set1 and set2, e.g., using one of the techniques described above, and initiates coordination to mitigate interference on those sounding resources by transmitting an SRS interference mitigation message which includes identifiers associated with those resource sets to neighboring eNBs including eNB 1 and eNB2. eNB0 receives responses from eNB 1 and eNB2 which indicate their priority order of sets 0-3, i.e., eNB 1 indicates a priority order, by set, of {2, 3, 1, 4}, which indicates the eNB 1 selects first from the third set, second from the first set, third from the second set and fourth from the fourth set, and eNB2 indicates a priority, by set, of {3, 1, 4, 2}, which indicates that eNB2 selects first from the second set, second from the fourth set, third from the first set and fourth from the third set. By multiplying the respective set priority values of the responses together, eNB0 can create the following metric:

$$set0 = 2*3 = 6$$

$$set1 = 3*1 = 3$$

$$set2 = 1*4 = 4$$

$$set3 = 4*2 = 8$$

Using this metric, eNB0 can then set its own priority order, i.e., the order in which it uses the sounding resource sets to allocate new sounding resources to UEs in its own cell, to {set3, set0, set2, set1}, i.e., set with the highest metric to the set with the lowest metric. Ping-pong effects can be avoided according to embodiments by using prohibit timers to prevent too frequent coordination requests. It may also be beneficial to allow the detection statistics to decay over time, or alternatively to reset them at certain time intervals, to prevent the situation from arising wherein every set will appear as occupied after several coordination attempts.

Among other things, interference mitigation for sounding reference signals according to the afore-described embodiments provides for better channel quality estimates to be generated using SRSs which, in turn, leads to improved system performance. Coupling detection of interference with the triggering of one or more interference mitigation actions provides an automated mechanism for such improved performance. As described above, implicit interference mitigation methods have the advantage of not requiring any signaling between eNBs, while using explicit signaling can speed up the coordination as well as reduce the impact of any misdetection that can occur if thresholds are not well tuned.

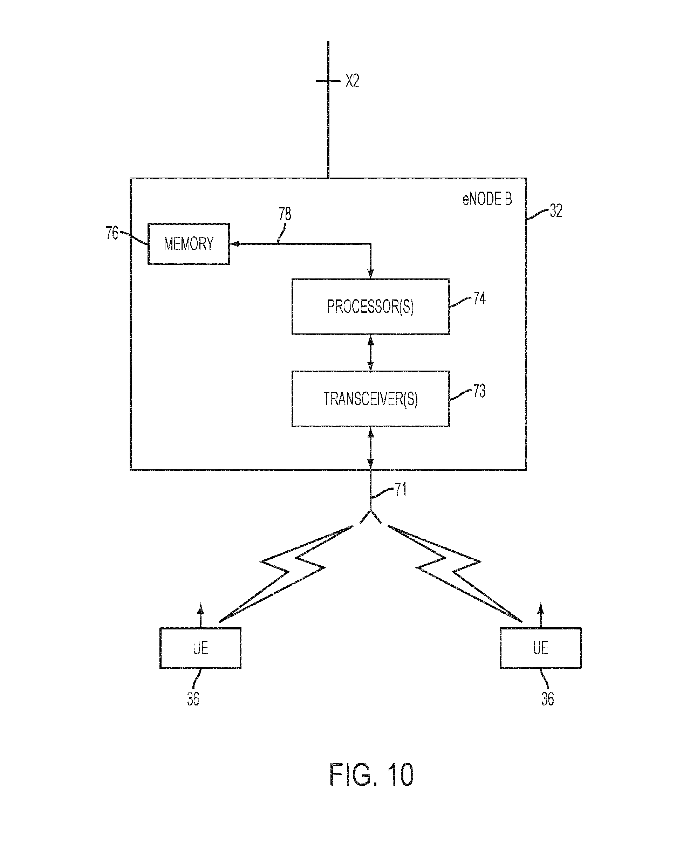

An exemplary base station 32, e.g., an eNodeB, which can detect such interference and initiate an interference mitigation action as described above is generically illustrated in Figure 10. Therein, the eNodeB 32 includes one or more antennas 71 connected to processor(s) 74 via transceiver(s) 73. The processor 74 is configured to analyze and process signals received over an air interface from UEs 36, e.g., sounding reference signals, via the antennas 71 and transceiver 73, as well as to transmit signals towards the UEs 36. Moreover, eNodeB 32 can also include other interfaces, for example an X2 interface, on which to transmit SRS interference mitigation signals, and receive responses, as described above. The processor(s) 74 may also be connected to one or more memory device(s) 76 via a bus 78. Further units or functions, not shown, for performing various operations as encoding, decoding, modulation, demodulation, encryption, scrambling, precoding, etc. may optionally be implemented not only as electrical components but also in software or a combination of these two possibilities as would be appreciated by those skilled in the art to enable the transceiver(s) 73 and processor(s) 74 to process uplink and downlink signals. A similar, generic structure, e.g., including a memory device, processor(s) and a transceiver, can be used, among other things, to other communication nodes, such as UEs 36, to receive SRS resource allocation and transmit sounding reference signals.

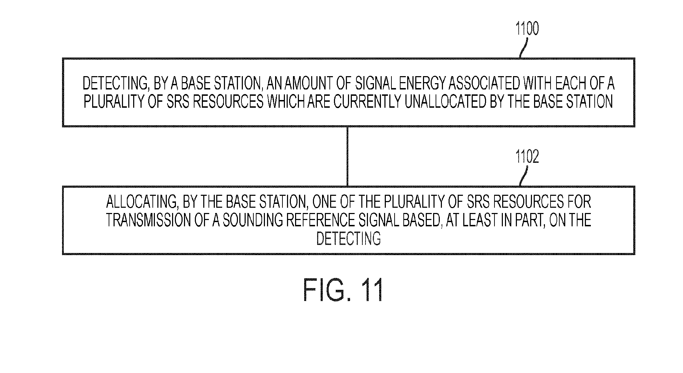

According to an embodiment, a method for allocating sounding reference signal (SRS) resources in a radiocommunication system includes the steps illustrated in the flowchart of Figure 11. Therein, at step 1100, a base station detects an amount of signal energy associated with each of a plurality of SRS resources which are currently unallocated by that base station. Then, the base station allocates one of that plurality of SRS resources, e.g., to a newly connected UE so that it can perform sounding, based, at least in part, on information obtained from the detecting at step 1102.

The above-described embodiments are intended to be illustrative in all respects, rather than restrictive, of the present invention. All such variations and modifications are considered to be within the scope and spirit of the present invention as defined by the following claims. No element, act, or instruction used in the description of the present application should be construed as critical or essential to the invention unless explicitly described as such. Also, as used herein, the article "a" is intended to include one or more items.

**Claims**

1. A method for allocating sounding reference signal (SRS) resources in a radiocommunication system, the method comprising:

   detecting (1100), by a base station (32), an amount of signal energy associated with each of a plurality of SRS resources which are currently unallocated by said base station; and
   allocating (1102), by said base station (32), one of said plurality of SRS resources for transmission of a sounding reference signal based, at least in part, on said detecting.

2. The method of claim 1, wherein said sounding reference signal includes a base sequence, said method further comprising:

   receiving, by said base station (32), said sounding reference signal; and
   using said sequence in said received sounding reference signal to calculate a channel estimate for an uplink channel associated with said received sounding reference signal.

3. The method of claims 1-2, wherein said step of detecting further comprises:

   determining that said amount of signal energy associated with another one of said plurality of SRS resources is above a threshold.

**4.** The method of claim 3, further comprising:

passing received radio frequency signal energy through a matched filter (602, 604, 606) which is tuned to said another one of said plurality of SRS resources, to determine that an energy level associated with said another one of said plurality of SRS resources is above said threshold, thereby indicating the presence of one or more interfering sounding reference signals which are using said another one of said plurality of SRS resources.

**5.** The method of claims 3-4, wherein said threshold is an absolute threshold.

**6.** The method of claims 3-4, wherein said threshold is a relative threshold.

**7.** The method of claims 1-6, wherein said step of allocating further comprises:

allocating one of said plurality of SRS resources on which the detected amount of signal energy is lower than the detected amount of signal energy on other of said plurality of SRS resources.

**8.** The method of claims 3-7, further comprising:

transmitting, by said base station, a signal toward neighboring base stations which includes information which identifies said another one of said plurality of SRS resources.

**9.** The method of claims 1-7, wherein said one of said plurality of SRS resources allocated by said base station is selected from one of a plurality of subsets of said plurality of SRS resources which could be used to transmit sounding reference signals.

**10.** The method of claim 9, further comprising:

transmitting, by said base station, a signal toward neighboring base stations which includes information about at least one of: (a) said one of said plurality of subsets used by said base station, and (b) one of said plurality of subsets associated with said another one of said plurality of SRS resources.

**11.** The method of claims 8 or 10, further comprising:

receiving, by said base station, a response to said transmitted signal which includes information associated with a priority order in which one of said neighboring base stations allocates SRS resources.

**12.** A base station (32) comprising:

at least one detector (600) configured to detect an amount of signal energy associated with each of a plurality of sounding reference signals, SRS, resources which are currently unallocated by said base station; and
a processor (74) configured to allocate one of said plurality of SRS resources for transmission of a sounding reference signal based, at least in part, on an output of said at least one detector.

**13.** The base station of claim 12, wherein said sounding reference signal includes a base sequence, said base station further comprising:

a transceiver (73) configured to receive said sounding reference signal; and
wherein said processor (74) is further configured to use said sequence in said received sounding reference signal to calculate a channel estimate for an uplink channel associated with said received sounding reference signal.

**14.** The base station of claims 12-13, wherein said at least one detector is further configured to determine that the amount of signal energy associated with another one of said plurality of SRS resources is above a threshold.

**15.** The base station of claim 14, wherein said at least one detector further comprises:

a matched filter (602, 604, 606) configured to receive radio frequency signal energy and which is tuned to said another one of said plurality of SRS resources, and a comparator (610, 612, 614) configured to determine that an energy level associated with said another one of said plurality of SRS resources is above said threshold, thereby indicating the presence of one or more interfering sounding reference signals which are using said another one of said plurality of SRS resources.

$\Delta f = 15$ kHz

ONE RESOURCE ELEMENT

ONE OFDM SYMBOL INCLUDING CYCLIC PREFIX

FIG. 1

SUB-FRAME (T$_{SUBFRAME}$ = 1 ms)

#0   #1...                                                                    #9

RADIO FRAME (T$_{FRAME}$ = 10 ms)

FIG. 2

FIG. 3

FIG. 4

FIG. 5

600

608

$X(n)$

602

$g_0(n)$

$X_0$

610

$X_0 > X_T$

USAGE OF RESOURCE 0 DETECTED?

604

$g_j(n)$

$X_j$

612

$X_j > X_T$

USAGE OF RESOURCE j DETECTED?

606

$g_{N-1}(n)$

$X_{N-1}$

614

$X_{N-1} > X_T$

USAGE OF RESOURCE N-1 DETECTED?

FIG. 6

FIG. 7

FIG. 8

FIG. 9

FIG. 10

1100

DETECTING, BY A BASE STATION, AN AMOUNT OF SIGNAL ENERGY ASSOCIATED WITH EACH OF A PLURALITY OF SRS RESOURCES WHICH ARE CURRENTLY UNALLOCATED BY THE BASE STATION

1102

ALLOCATING, BY THE BASE STATION, ONE OF THE PLURALITY OF SRS RESOURCES FOR TRANSMISSION OF A SOUNDING REFERENCE SIGNAL BASED, AT LEAST IN PART, ON THE DETECTING

FIG. 11

Europäisches
Patentamt

European
Patent Office

Office européen
des brevets

# EUROPEAN SEARCH REPORT

Application Number

EP 12 15 1328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/103897 A1 (SUH SUNG-JIN [KR] ET AL) 29 April 2010 (2010-04-29)<br>* abstract *<br>* paragraph [0009] - paragraph [0013] *<br>* paragraph [0028] - paragraph [0036] *<br>* paragraph [0039] - paragraph [0043] *<br>* paragraph [0053] - paragraph [0061] *<br>* paragraph [0073] - paragraph [0077] *<br>* paragraph [0086] - paragraph [0101] *<br>* paragraph [0109] - paragraph [0116] *<br>----- | 1-15 | INV.<br>H04W72/08 |
| Y | EP 0 419 243 A2 (NIPPON TELEGRAPH & TELEPHONE [JP]) 27 March 1991 (1991-03-27)<br>* abstract *<br>* column 1, line 1 - column 3, line 54 *<br>* column 5, line 20 - column 10, line 4 *<br>----- | 1-15 | |
| A | US 2010/322227 A1 (LUO TAO [US]) 23 December 2010 (2010-12-23)<br>* paragraph [0144] - paragraph [0145] *<br>* paragraph [0168] - paragraph [0170] *<br>* paragraph [0175] - paragraph [0215] *<br>----- | 1-3,5-14 | |
| A | PANTECH&CURITEL: "Further consideration on enhanced SRS for CoMP/non-CoMP user group",<br>3GPP DRAFT; R1-095087, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>no. Jeju; 20091109,<br>9 November 2009 (2009-11-09), XP050389421,<br>[retrieved on 2009-11-13]<br>* paragraphs 1. to 4. *<br>----- | 1,2,<br>8-10,12,<br>13 | TECHNICAL FIELDS SEARCHED (IPC)<br><br>H04W |

-/--

The present search report has been drawn up for all claims

| Place of search | Date of completion of the search | Examiner |
|---|---|---|
| Munich | 24 April 2012 | Biyee, Nicole |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 12 15 1328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/046202 A1 (NOKIA SIEMENS NETWORKS OY [FI]; CHUN JOON HWA [US]; KANG JIAN FENG [CN] 29 April 2010 (2010-04-29) <br> * abstract * <br> * paragraph [0007] - paragraph [0010] * <br> * paragraph [0038] - paragraph [0059] * <br> * paragraph [0067] * <br> * paragraph [0070] - paragraph [0074] * <br> * paragraph [0077] * <br> ----- | 1-3, 12-14 | |
| A | CHOI J M ET AL: "Sounding subband allocation algorithm for proportional fair scheduling in OFDMA/FDD uplink", ELECTRONICS LETTERS, IEE STEVENAGE, GB, vol. 43, no. 9, 26 April 2007 (2007-04-26) , pages 539-540, XP006028697, ISSN: 0013-5194, DOI: 10.1049/EL:20070155 <br> * page 539 * <br> ----- | 1-3, 12-14 | |

TECHNICAL FIELDS
SEARCHED     (IPC)

The present search report has been drawn up for all claims

| Place of search | Date of completion of the search | Examiner |
|---|---|---|
| Munich | 24 April 2012 | Biyee, Nicole |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                     

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 15 1328

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2012

| Patent document cited in search report | | Publication date | Patent family member(s) | | Publication date |
|---|---|---|---|---|---|
| US 2010103897 | A1 | 29-04-2010 | NONE | | |
| EP 0419243 | A2 | 27-03-1991 | DE | 69015748 D1 | 16-02-1995 |
| | | | DE | 69015748 T2 | 11-05-1995 |
| | | | EP | 0419243 A2 | 27-03-1991 |
| | | | JP | 2854346 B2 | 03-02-1999 |
| | | | JP | 3174827 A | 30-07-1991 |
| | | | US | 5093924 A | 03-03-1992 |
| US 2010322227 | A1 | 23-12-2010 | CA | 2766144 A1 | 13-01-2011 |
| | | | EP | 2446576 A2 | 02-05-2012 |
| | | | US | 2010322227 A1 | 23-12-2010 |
| | | | WO | 2011005537 A2 | 13-01-2011 |
| WO 2010046202 | A1 | 29-04-2010 | EP | 2353249 A1 | 10-08-2011 |
| | | | US | 2011261806 A1 | 27-10-2011 |
| | | | WO | 2010046202 A1 | 29-04-2010 |

EPO FORM P0459

For more details about this annex : see Official Journal of the European Patent Office, No. 12/82

**EP 2 485 555 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2008000193 W